# EUROPÄISCHE PATENTSCHRIFT

(11) **EP 3 339 818 B1**
(45) Veröffentlichungstag und Bekanntmachung des Hinweises auf die Patenterteilung: **12.06.2019**
(21) Anmeldenummer: 16002741.3
(22) Anmeldetag: 23.12.2016
(51) Int. Cl.: G01G 21/23, G01G 13/02

(54) **VORRICHTUNG UND VERFAHREN ZUM WIEGEN VON GEFÜLLTEN KAPSELN**
DEVICE AND METHOD FOR WEIGHING FILLED CAPSULES
DISPOSITIF ET PROCÉDÉ DE PESAGE DE CAPSULES REMPLIES

(43) Veröffentlichungstag der Anmeldung: 27.06.2018
(73) Patentinhaber: Harro Höfliger Verpackungsmaschinen GmbH, 71573 Allmersbach im Tal (DE)
(72) Erfinder: Kiehn, Uwe, 71573 Allmersbach im Tal (DE); Puppich, Thomas, 71573 Allmersbach im Tal (DE)
(74) Vertreter: Zurhorst, Stefan

(56) Entgegenhaltungen:
- WO-A1-97/31244
- WO-A1-2012/023118
- DE-A1-102008 027 624

## Beschreibung

Die Erfindung betrifft eine Vorrichtung zum Wiegen von Kapseln nach dem Oberbegriff des Anspruchs 1 sowie ein Verfahren zum Wiegen von Kapseln mittels einer solchen Vorrichtung.

Im pharmazeutischen Bereich und auch im Bereich von Nahrungsergänzungsmitteln werden zahlreiche Präparate in Kapseln abgefüllt, die zur oralen Einnahme vorgesehen sind. Bei verschiedenen Präparaten kommt es darauf an, dass diese als Einheitsdosis in der Kapsel mit einer fest definierten und exakt eingehaltenen Masse bereitgestellt werden. Geeignete Dosiervorrichtungen und -verfahren sollen sicherstellen, dass unter den Bedingungen der Großserienabfüllung sehr enge Massentoleranzen von beispielsweise ± 2 mg eingehalten werden.

Solche Anforderungen an die Zielmasse gehen zunehmend auch mit dem Wunsch nach geeigneten Prüf- bzw. Verifikationsmaßnahmen einher. Zur Erfüllung solcher Forderungen sind insbesondere mehrspurig aufgebaute Kapselfüllmaschinen und mehrspurige Wiegesysteme im Einsatz. Die befüllten Kapseln werden entweder stichprobenartig auf die richtige Füllmenge kontrolliert oder aber, bei einer entsprechenden Anforderung, einer 100%ige In-Prozess-Kontrolle zugeführt. Dazu werden die Kapseln an eine mehrspurige Kapselwiegemaschine gefördert. Ist keine direkte Verbindung vorhanden, so kann die Kapselwiegemaschine auch von Hand beschickt werden. In der Kapselwiegemaschine führt ein Kapseltransporter die einzelnen Kapseln an eine Wiegeeinheit heran. Beim Erreichen der Wiegeeinheit wird die Kapsel aus ihrer Bewegung mittels einer Stoppvorrichtung gestoppt und anschließend auf einer Wiegeaufnahme der Wiegeeinheit horizontal liegend abgelegt. Dort erfolgt dann eine prüfende Wägung der gefüllten Kapsel, bevor sie weitertransportiert und durch die nachfolgende Kapsel an der Wiegevorrichtung ersetzt wird.

Die Kapseln können direkt in ein- oder mehrspurigen Kapselfüllmaschinen mit einer Wiegevorrichtung verwogen werden, oder in einer separaten ein- oder mehrspurigen Wiegemaschine. Diese Wiegemaschine kann direkt von einer Kapselfüllmaschine beschickt werden oder auch manuell von Hand befüllt werden. Dadurch ist gemäß obiger Beschreibung tatsächlich eine 100%ige In-Prozess-Kontrolle möglich ist. Allerdings hat sich gezeigt, dass die solchermaßen durchgeführte Wägung den limitierenden Faktor hinsichtlich Durchlaufgeschwindigkeit und Ausbringungsmenge darstellt. Für eine im Milligramm-Bereich exakt und wiederholbar durchzuführende Gewichtsmessung muss die jeweilige Kapsel absolut ruhig auf der Wiegeaufnahme aufliegen. Die mit hoher Geschwindigkeit herangeführte Kapsel muss also zunächst abgebremst, also gestoppt und dann sauber abgelegt werden, bevor die eigentliche Wägung durchgeführt werden kann. Für einen schnellen Weitertransport ist dann erneut eine hohe Beschleunigung erforderlich. Um trotzdem eine für die Messung ausreichend lange Ruhephase zu haben, darf die Taktzahl der Maschine insgesamt ein bestimmtes Maß nicht überschreiten. Eine Steigerung der Ausbringungsmenge kann unter diesen Bedingungen nur durch eine Erhöhung der Anzahl der Maschinenspuren erreicht werden, was den für die Wiegevorrichtung ohnehin schon hohen Investitionsaufwand weiter erhöht. Das Dokument WO2012/023118 A1 offenbart ein System und Verfahren zum Wiegen von Kapseln nach der Präambel von Anspruch 1.

Der Erfindung liegt die Aufgabe zugrunde, eine gattungsgemäße Vorrichtung zum Wiegen von gefüllten Kapseln derart weiterzubilden, dass eine präzise Wägung auch bei verkürzten Taktzeiten möglich ist.

Diese Aufgabe wird durch eine Vorrichtung mit den Merkmalen des Anspruchs 1 gelöst.

Der Erfindung liegt des Weiteren die Aufgabe zugrunde, ein schnelleres Verfahren zum Wiegen von Kapseln anzugeben.

Diese Aufgabe wird durch ein Verfahren mit den Merkmalen des Anspruchs 6 gelöst.

Die Erfindung basiert zunächst auf der Kenntnis, dass Kapseln mit unterschiedlichem Füllgrad unterschiedlich empfindlich auf Verkürzungen der Wiegetaktzeiten reagieren. So wurde zunächst erkannt, dass vollgefüllte Kapseln in einer relativ kurzen Zeit exakt gewogen werden können, während teilgefüllte Kapseln hierfür einen im Vergleich längeren Zeitraum benötigen. Dies führte zu der weiteren erfindungsgemäßen Erkenntnis, dass die Füllung von teilgefüllten Kapseln auch dann noch ein dynamisches Verhalten zeigen, wenn der Vorgang des Abbremsens und Ablegen der Kapsel auf der Wiegeaufnahme an sich bereits abgeschlossen ist. Infolge der anfänglich wirkenden Verzögerung beim Stoppen sammelt sich die Füllung am in Bewegungsrichtung vorderen Ende der Kapsel. Nach der Ablage auf der Wiegeaufnahme rieselt die vorne in der Kapsel angesammelte pulver- oder granulatartige Füllung zumindest teilweise auf die in Gewichtskraftrichtung unten liegende Kapselwand zurück, wobei sich nach Art einer Schüttung eine Böschung mit einem bestimmten Böschungswinkel ausbildet. Dieser Vorgang des Zurückrieselns, gegebenenfalls in Verbindung mit einer Böschungsbildung nimmt eine bestimmte Zeit in Anspruch, während die Kapsel bereits auf der Wiegeaufnahme liegt. Solange die Füllung im Kapselinneren noch in Bewegung ist, werden die Messergebnisse einer Wägung verfälscht. Im Ergebnis basiert die Erfindung also auf der Erkenntnis, dass eine schnelle und exakte Wägung der gesamten Kapsel erst dann vorgenommen werden kann, wenn erstens zusammen mit der Kapselhülle auch die Füllung zur Ruhe gekommen ist, und wenn zweitens für alle Kapseln vergleichbare Ruhelagen erzielt werden können.

Aufbauend hierauf sieht die Erfindung eine Vorrichtung vor, bei der der Aufnahmeabschnitt der Wiegeaufnahme als Reibungsauflage ausgebildet und bezüglich einer Horizontalrichtung derart geneigt ist, dass ein bezogen auf die Bewegungsrichtung vorderes Ende des Aufnahmeabschnittes tiefer liegt als ein hinteres Ende des Aufnahmeabschnittes. Im zugehörigen erfindungsgemäßen Verfahren wird eine zumindest teilweise mit der Füllung gefüllte Kapsel mittels eines Kapseltransporters in der Bewegungsrichtung an die Wiegeeinheit herangeführt. Beim Erreichen der Wiegeeinheit wird die Kapsel aus ihrer Bewegung in der Bewegungsrichtung mittels einer Stoppvorrichtung gestoppt. Die gestoppte Kapsel wird in einem Aufnahmeabschnitt der Wiegeaufnahme derart geneigt abgelegt, dass ein bezogen auf die zuvor genannte Bewegungsrichtung vorderes Ende der Kapsel tiefer liegt als ein hinteres Ende der Kapsel. Die Ausbildung der Wiegeaufnahme als Reibungsauflage bedeutet, dass die Kapsel in ihrer geneigten Lage und bezogen auf die Bewegungsrichtung allein unter Einwirkung von Haftreibung auf der Wiegeaufnahme zu liegen kommt. Es sind also keine in der Bewegungsrichtung wirkenden Anschläge, Stopper oder andere formschlüssige Positioniermittel vorgesehen, welche die Kapsel in beim Wiegen in der Bewegungsrichtung festhalten. Die derart geneigt abgelegte Kapsel wird nun gewogen.

Zwar kann das Stoppen der Kapsel formschlüssig beispielweise mit einem Austakthebel erfolgen. Jedoch das anschließende reine Liegen der Kapsel allein unter Einwirkung der Haftreibung hat eine zuverlässige Reproduzierbarkeit der Kapselorientierung beim Wiegen zur Folge. Es kann zuverlässig ausgeschlossen werden, dass einzelne Kapsel in aufgestellter Lage statt wie gewünscht liegend zur Ruhe kommen. Für alle Kapseln gelten also die gleichen Rahmenbedingungen beim Wiegen. Aufgrund der erfindungsgemäßen Neigung des Aufnahmeabschnittes der Wiegeaufnahme und der erfindungsgemäß geneigten Ablage der Kapsel hierauf kann die Zeitspanne deutlich verringert werden, in welcher die Füllung nach dem Stoppen der Kapsel aus der vorderen Stopp-Position zurück rieselt oder fließt. Je nach Abstimmung der einzelnen Parameter wie Pulvereigenschaften, Neigungswinkel und dergleichen kann möglicherweise sogar erreicht werden, dass die Ausbildung einer Böschung gar nicht stattfindet und nichts zurück rieselt. Jedenfalls müssen im Vergleich zum Stand der Technik deutlich kürzere Wartezeiten eingehalten werden, bevor eine verlässliche Wägung vorgenommen werden kann. Ggf. können solche Wartezeiten sogar ganz entfallen. Der eigentliche Vorgang des Wiegens selbst kann sehr kurz gehalten werden, sodass nachfolgende Kapseln in sehr kurzen Zeitintervallen zur Wägung herangeführt werden können. Insgesamt kann eine deutliche Verkürzung der Taktzeiten und damit eine entsprechend Erhöhung der Ausbringungsmenge erreicht werden. Dennoch lassen sich bei der Wägung sehr enge Massentoleranzen von beispielsweise ± 2 mg einhalten.

Dabei gilt es, einen guten Kompromiss zwischen geringer Bewegung der Füllung und geringer Tendenz der Kapsel zum Rutschen auf der geneigten Auflagefläche zu finden. Es gilt zu berücksichtigen, dass für ein ruhiges Verhalten der Füllung hohe Neigungswinkel nützlich sind, während im Widerspruch dazu geringe Neigungswinkel des Aufnahmeabschnittes der Wiegeaufnahme zu einer verringerten Rutschtendenz der darauf abgelegten Kapsel führen. Der Winkel der vorgenannten Neigung des Aufnahmeabschnittes der Wiegeaufnahme relativ zur Horizontalrichtung liegt deshalb vorteilhaft in einem Bereich von einschließlich 5° bis einschließlich 25°, bevorzugt in einem Bereich von einschließlich 8° bis einschließlich 20° und insbesondere in einem Bereich von einschließlich 11° bis einschließlich 17°. Einerseits kann in den genannten Winkelbereichen sichergestellt werden, dass die Kapsel durch Reibschluss gehalten wird und ihre vorgesehene Position beibehält, ohne zur rutschen. Je nach Kapselgeometrie und Riesel- bzw. Fließverhalten der Füllung konnten andererseits in den genannten Winkelbereichen sehr schnelle Beruhigungen beobachtet werden, so dass kurze bis gar keine Wartezeiten von der Kapselablage bis zum Messungsbeginn erforderlich waren. In einer ersten bevorzugten Ausführungsform beträgt hierzu der genannte Neigungswinkel 17° ± 2°, was sich als guter Kompromiss mit Schwerpunkt auf einer geringen Füllungsbewegung herausgestellt hat. In einer zweiten bevorzugten Ausführungsform beträgt der genannte Neigungswinkel 11° ± 2°. Hierbei wird eine verringerte Rutschtendenz der Kapsel bei immer noch brauchbar geringer Füllungsbewegung erreicht.

In vorteilhafter Weiterbildung der Erfindung ist der Kapseltransporter als drehbares Transportrad ausgebildet, wobei die Wiegeaufnahme eine in der Bewegungsrichtung verlaufende Teilkreisform aufweist. Die Teilkreisform erlaubt je nach Bedarf eine Variierung des Neigungswinkels allein dadurch, dass die Kapseln bei einem etwas früheren oder etwas späteren Drehwinkel des Transportrades aus dem Kapseltransporter ausgetaktet und abgelegt werden. Damit kann eine Anpassung des Neigungswinkels beim Wiegen praktisch ohne konstruktive Änderungen erfolgen. Außerdem erleichtert die Teilkreisform eine gesteuerte Abfuhr der gewogenen Kapsel.

In einer vorteilhaften Ausführungsform ist der Aufnahmeabschnitt durch zwei Teilflächenabschnitte gebildet, wobei die beiden Teilflächenabschnitte im Querschnitt des Aufnahmeabschnittes betrachtet einander zugewandt geneigt sind. In bevorzugter Weiterbildung schließen die beiden Teilflächenabschnitte einen Flächenwinkel ein, der in einem Bereich von einschließlich 120° bis einschließlich 60° liegt und insbesondere zumindest näherungsweise 90° beträgt. In Folge der hierdurch gebildeten Rinnenform wird nicht nur eine seitliche Führung der Kapsel erreicht. Vielmehr bilden die beiden geneigten Teilflächenabschnitte aus den Auflagerkräften ein Kräfteparallelogramm mit einander zugewandten Kraftkomponenten, die bei gegebenem Neigungswinkel und Reibungskoeffizient zu einer erhöhten Haltekraft an der Kapsel führen. Deren Neigung zum Rutschen ist zuverlässig überwunden.

Der zugrunde liegende Stand der Technik sowie ein Ausführungsbeispiel der Erfindung sind nachfolgend anhand der Zeichnung näher beschrieben. Es zeigen:
- Fig. 1: in einer schematischen Stirnansicht eine Vorrichtung zum Wiegen von Kapseln nach dem Stand der Technik beim horizontalen Abbremsen der an die Wiegeeinheit herangeführten Kapsel,
- Fig. 2: in einer vergrößerten Detaildarstellung die Anordnung nach Fig. 1 im Bereich der Wiegeeinheit mit horizontal darauf abgelegter Kapsel unter Ausbildung einer Schüttungsböschung der Füllung im Innenraum der Kapsel,
- Fig. 3: in einer schematischen Frontansicht eine erfindungsgemäß ausgeführte Vorrichtung zum Wiegen von Kapseln beim schrägen Abbremsen einer herangeführten Kapsel,
- Fig. 4: in einer vergrößerten Detailansicht die Anordnung nach Fig. 3 im Bereich der Wiegeeinheit mit einem geneigten Aufnahmeabschnitt und einer geneigt darauf abgelegten Kapsel unter Ausbildung einer verringerten Schüttungsböschung, und
- Fig. 5: in einer Querschnittsdarstellung die Wiegeaufnahme der Anordnung nach Fig. 4 mit Einzelheiten von Teilflächenabschnitten zur Auflage der Kapsel, die einander zugewandt geneigt sind.

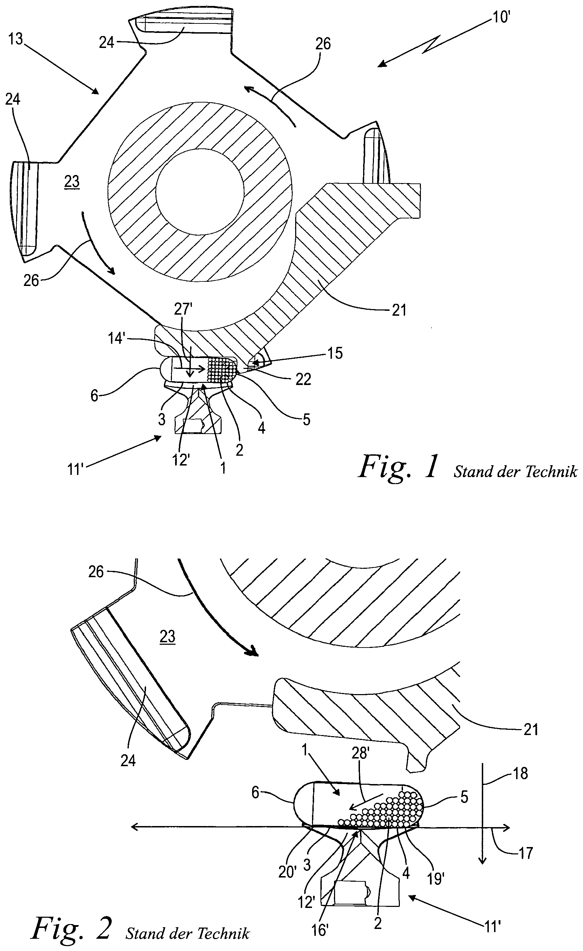

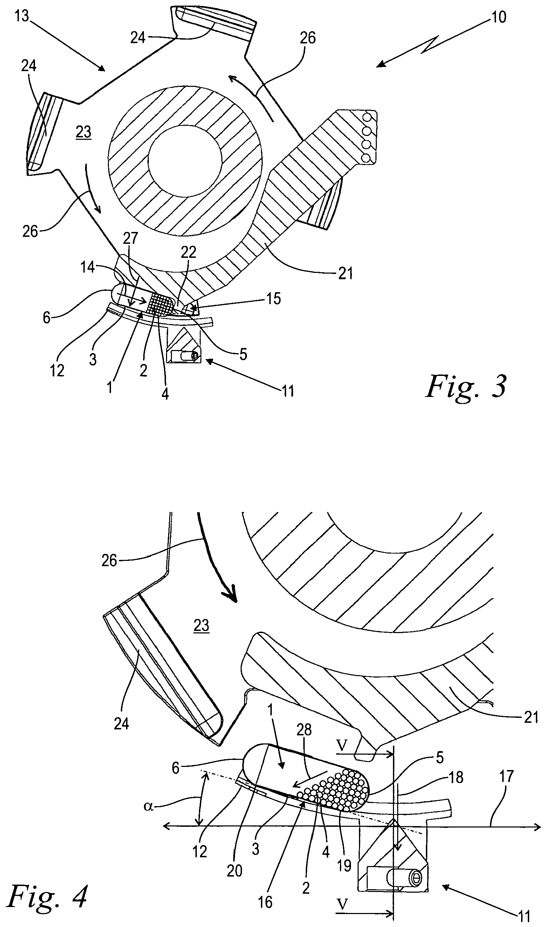

Die Fig. 1, 2 zeigen eine Vorrichtung 10' zum Wiegen von Kapseln 1 mit einer Füllung 2 nach dem Stand der Technik. Die Fig. 3, 4 zeigen in vergleichbaren Ansichten eine erfindungsgemäß modifizierte Vorrichtung 10 für den gleichen Zweck, wobei gleiche Merkmale mit gleichen Bezugszeichen versehen sind. Der Einfachheit halber werden beide Vorrichtungen 10', 10 und die damit ausgeführten Verfahren insoweit gemeinsam beschrieben, als für beide gemeinsame Angaben gelten. Lediglich die Unterschiede werden explizit hervorgehoben. Sofern also nicht ausdrücklich dem Stand der Technik oder der erfindungsgemäßen Abwandlung zugeordnet, gilt das nachfolgend gesagte für beide Ausführungen. Die Vorrichtungen 10, 10' sind in gewöhnlicher, aufrecht stehender Betriebsposition relativ zu einer Horizontalrichtung 17 und einer orthogonal dazu liegenden Gewichtskraftrichtung 18 gezeigt. Die Gewichtskraftrichtung 18 entspricht der Richtung der Erdanziehungskraft beziehungsweise der Erdbeschleunigung.

Die zu wiegende Kapsel 1 ist hier beispielhaft als Steckkapsel mit einem Kapselunterteil 4 und einem aufgesteckten Kapseloberteil 3 gezeigt. Es können aber auch andere, beispielsweise vollständig geschlossene Kapselformen in Betracht kommen. Die Kapsel 1 enthält eine Füllung 2 mit grafisch angedeuteten Körnern, demnach die Füllung ein Pulver, ein Granulat oder dergleichen ist. Im Rahmen der Erfindung können aber auch Flüssigkeiten als Füllung 2 vorgesehen sein. Jedenfalls geht es vorrangig um Füllungen 2, die fließende oder fließähnliche Eigenschaften haben. Außerdem wird in Fig. 1 noch deutlich, dass die Kapsel 1 nur teilgefüllt ist, demnach also die Füllung 2 den Innenraum der Kapsel 1 nicht vollständig ausfüllt. Mit der erfindungsgemäßen Verfahren und der erfindungsgemäßen Vorrichtung können allerdings auch vollständig gefüllte Kapseln 1 gewogen werden.

Die Fig. 1, 3 zeigen in einer schematischen Frontansicht jeweils eine Vorrichtung 10, 10'. Die Vorrichtungen 10, 10' umfassen jeweils eine Wiegeeinheit 11, 11' mit einer Wiegeaufnahme 12, 12' für jeweils eine einzelne zu wiegende Kapsel 1, sowie einen Kapseltransporter 13 zum Heranführen einzelner Kapseln 1 an die jeweilige Wiegeeinheit 11, 11'. Die Kapseltransporter 13 sind im gezeigten Ausführungsbeispiel als drehendes Transportrad 23 mit ringsum die Drehachse angeordneten Kapselklammern 24 ausgebildet. Im Rahmen der Erfindung kann der Kapseltransporter aber auch eine lineare Fördereinheit oder dergleichen sein. Im Betrieb nehmen die Kapselklammern 24 einzelne und fertig befüllte Kapseln 1 auf, um sie während des Transports zur Wiegeeinheit 11, 11' zu halten. Für eine übersichtliche Darstellung sind hier jedoch die Kapselklammern 24 leer dargestellt, während sich nur eine einzelne Kapsel 1 im unmittelbaren Bereich der Wiegeeinheit 11, 11' befindet.

Der Kapseltransporter 13 bzw. das Transportrad 23 wird mit kontinuierlich gleichmäßiger Bewegungs- bzw. Drehgeschwindigkeit entsprechend einem Pfeil 26 betrieben, demnach auch die in den Kapselklammern 24 gehaltenen Kapseln 1 eine entsprechende Bewegungsgeschwindigkeit haben, und zwar unmittelbar beim Erreichen der jeweiligen Wiegeeinheit 11, 11' in einer zugehörigen Bewegungsrichtung 14, 14'. Die Vorrichtungen 10, 10' umfassen Stoppvorrichtungen 15 für die jeweils in der Bewegungsrichtung 14, 14' an die Wiegeeinheit 11, 11' herangeführte Kapsel 1. Die hierdurch bei ansonsten weiter drehendem Transportrad 23 gestoppten Kapseln 1 werden anschließend auf der jeweiligen Wiegeaufnahme 12, 12' der Wiegeeinheit 11, 11' abgelegt. Dieses Ablegen erfolgt gemäß Pfeilen 27, 27' in einer Richtung, die etwa senkrecht zu oben genannter Bewegungsrichtung 14, 14' liegt. Für das Stoppen und Ablegen ist ein Austakthebel 21 vorgesehen, welcher zur Bildung der Stoppvorrichtung 15 mit einer Stoppnase 22 versehen ist. Beim Annähern der jeweiligen Kapselklammer 24 schwenkt der Austakthebel 21 von oben in den Bewegungspfad der herangeführten Kapsel 1. Die Kapsel 1 bleibt folglich mit ihrem in der Bewegungsrichtung 14, 14' vorderen Ende 5 an der Stoppnase 22 formschlüssig hängen, während sie gleichzeitig nach unten zur Wiegeaufnahme 12, 12' hin gedrückt wird und dort zu liegen kommt..

In den Fig. 1 und 3 ist noch erkennbar, dass das Stoppen der Kapseln 1 entgegen der jeweiligen Bewegungsrichtung 14, 14' auch zu einem Bremsen der Füllung 2 innerhalb der Kapsel 1 führt. Infolge der wirkenden Massenkräfte sammelt sich die Füllung 2 im Bereich des vorderen Endes 5 der Kapsel 1, während bei der hier teilgefüllt dargestellten Kapsel 1 deren hinteres Ende 6 frei ist. Die Fig. 2 und 4 zeigen in vergrößerter Detaildarstellung die Kapseln 1, nachdem sie auf der jeweiligen Wiegeaufnahme 12, 12' der zugehörigen Wiegeeinheit 11, 11' abgelegt wurden. Der Austakthebel 21 ist so weit angehoben, dass er nicht mehr in Kontakt mit der Kapsel 1 steht. Ab diesem Moment beginnt ein Zeitfenster, innerhalb dessen die Wägung der Kapsel 1 zu erfolgen hat. Das Zeitfenster endet, sobald der Kapseltransporter 13 - hier beispielhaft mittels der nachfolgenden Kapselklammer 24 - erneut in Kontakt mit der Kapsel 1 tritt und diese von der Wiegeaufnahme 12, 12' der Wiegeeinheit 11, 11' herunterschiebt.

Aus den Fig. 2, 4 wird aber auch deutlich, dass die Füllung 2 innerhalb der Kapsel 1 nach dem Abbremsen bzw. Stoppen gemäß den Fig. 1, 3 aus dem Bereich des vorderen Endes 5 zumindest teilweise zurück auf den in Gewichtskraftrichtung 18 unteren Wandbereich der Kapsel 1 fließt bzw. rieselt, wie dies durch Pfeile 28, 28' angedeutet ist. Bei pulverartigen oder granulatförmigen Füllungen 2 kann sich eine böschungsartig geneigte Oberfläche ausbilden. Erst nachdem dies geschehen ist, nachdem also die Füllung 2 zur Ruhe gekommen ist, kann eine Wägung mit ausreichender Genauigkeit vorgenommen werden. Die Zeitspanne, die die Füllung 2 dafür braucht zur Ruhe zu kommen, geht also innerhalb des oben genannten Zeitfensters für die Durchführung der Wägung verloren.

Die Wiegeaufnahmen 12, 12' weisen jeweils einen Aufnahmeabschnitt 16, 16' auf, innerhalb dessen die Kapsel 1 abgelegt wird. Als Referenz für die Orientierung des jeweiligen Aufnahmeabschnitts 16, 16' und der Kapsel 1 sind die Horizontalrichtung 17 und senkrecht dazu die Gewichtskraftrichtung 18 beim gewöhnlichen Betrieb eingezeichnet, auf die hier Bezug genommen wird. Beim Stand der Technik nach den Fig. 1, 2 ist der Aufnahmeabschnitt 16' im Wesentlichen horizontal, also parallel zur Horizontalrichtung 17 ausgerichtet. Dementsprechend liegt auch die Kapsel 1 mit ihrer Längsachse im Wesentlichen horizontal auf dem Aufnahmeabschnitt 16' auf. Außerdem ist in Fig. 1 erkennbar, dass die an die Wiegeeinheit 11' herangeführte Kapsel 1 in dem Moment gestoppt wird, in dem die Kapsel 1 parallel zum Aufnahmeabschnitt 16' liegt, und wobei ihre Bewegungsrichtung 14' ebenfalls horizontal ist. Gemäß Fig. 1 folgt dann die Übergabe der Kapsel 1 aus dem Kapseltransporter 13, hier aus der Kapselklammer 24 des Transportrades 23 in einer Übergaberichtung, die durch einen Pfeil 27' angegeben ist, und die etwa in der Gewichtskraftrichtung 18 liegt. Aus der horizontalen Ausrichtung der Kapsel 1 beim Stoppen, bei der Übergabe zur Wiegeeinheit 11' und beim Aufliegen auf dem Aufnahmeabschnitt 16' der Wiegeaufnahme 12' folgt eine ausgeprägte Umlagerung der Füllung 2 innerhalb der Kapsel 1 vom vorderen Ende 5 beim Stoppen gemäß Fig. 1 zurück zur unteren Kapselwand gemäß dem Pfeil 28' nach Fig. 2, in dessen Folge erst nach einer bestimmten Beruhigungsphase eine zuverlässige Wägung der Kapsel 1 vorgenommen werden kann.

Im Unterschied zum Stand der Technik nach den Fig. 1 und 2 sieht die Erfindung gemäß den Fig. 3 und 4 eine geneigte Positionierung der Kapsel 1 vor. Die erfindungsgemäße Vorrichtung 10 ist dazu ausgelegt, die gemäß Fig. 3 gestoppte Kapsel 1 in einem bestimmten Aufnahmeabschnitt 16 der Wiegeaufnahme 12 abzulegen. Die Kapsel 1 wird gemäß Fig. 3 an die Wiegeeinheit 11 in einer Bewegungsrichtung 14 herangeführt, welche in dem Moment, in dem die Kapsel 1 den Aufnahmeabschnitt 16 erreicht hat, parallel zum geneigten Aufnahmeabschnitt 16 liegt. Bezogen auf diese Bewegungsrichtung 14 weist der Aufnahmeabschnitt 16 ein vorderes Ende 19 sowie ein hinteres Ende 20 auf. Insbesondere in Fig. 4 wird deutlich, dass der Aufnahmeabschnitt 16 bezüglich der Horizontalrichtung 17 derart geneigt ist, dass sein vorderes Ende 19 in der Gewichtskraftrichtung 18 tiefer liegt als sein hinteres Ende 20. Nach Fig. 4 liegt die Kapsel 1 mit ihrem vorderen Ende 5 auf dem vorderen Ende 19 und mit ihrem hinteren Ende 6 auf dem hinteren Ende 20 des Aufnahmeabschnitts 16 auf. Durch das vordere Ende 19 und das hintere Ende 20 hindurch gemessen ist der Aufnahmeabschnitt 16 bezüglich der Horizontalrichtung 17 in einem Neigungswinkel α geneigt, der vorteilhaft in einem Bereich von einschließlich 5° bis einschließlich 25°, bevorzugt in einem Bereich von einschließlich 8° bis einschließlich 20° und insbesondere in einem Bereich von einschließlich 11° bis einschließlich 17° liegt. Im gezeigten Ausführungsbeispiel beträgt der Neigungswinkel α etwa 11° ± 2°, kann aber auch beispielsweise etwa 17° ± 2° betragen. Das gleiche gilt auch für die Neigung der drauf abgelegten Kapsel 1, deren vorderes Ende 5 in der Gewichtskraftrichtung 18 tiefer liegt als ihr hinteres Ende 6.

In Verbindung mit der Ausführung des Kapseltransporters 13 als drehbares Transportrad 23 weist die Wiegeaufnahme 12 in der hier gezeigten, durch die Horizontalrichtung 17 und die Gewichtskraftrichtung 18 aufgespannte Ebene eine in der Bewegungsrichtung 14 verlaufende Teilkreisform auf. Durch eine geeignete Synchronisation des Stoppens der Kapsel 1 mit der Drehbewegung des Transportrades 23 kann der Ablageort der Kapsel 1 auf der Wiegeaufnahme 12 variiert, also in der zeichnerischen Darstellung nach den Fig. 3, 4 weiter nach links oder nach rechts verschoben werden. Hierdurch ändert dann auch der zuvor beschriebene Neigungswinkel a, der auf diese Weise an die jeweiligen Erfordernisse angepasst werden kann.

Erkennbar ist noch, dass die erfindungsgemäße Wiegeaufnahme 12 als Reibungsauflage ausgebildet ist. Dies bedeutet mit anderen Worten, dass die Kapsel 1 nach dem Anheben des Austakthebels 21 und insbesondere beim Wiegen in ihrer schrägen Lage allein unter Einwirkung ihrer Gewichtskraft und der daraus folgenden Haftreibung auf dem geneigten Aufnahmeabschnitt 16 der Wiegeaufnahme 12 ihre in der Bewegungsrichtung 14 gemessene und vorgesehene Position beibehält. Diese Position behält sie bei, ohne in der Bewegungsrichtung 14 zu rutschen, und ohne dass Anschläge oder andere formschlüssige Positioniermittel an der Wiegeaufnahme 12 vorhanden sind, um ein Rutschen in der Bewegungsrichtung 14 zu verhindern. Das Fehlen solcher Anschläge oder dergleichen begünstigt auch ein oben schon beschriebenes Variieren der Kapselposition und -Neigung beim Wiegen.

Aus der Zusammenschau der Fig. 3 und 4 ist noch erkennbar, dass die Bewegungsrichtung 14 und auch die Längsachse der Kapsel 1 bereits beim Erreichen des Aufnahmeabschnitts 16 gleichermaßen relativ zur Horizontalrichtung 17 geneigt sind. Die Richtung der senkrecht dazu ausgeführten Übergabe der Kapsel 1 vom Kapseltransporter 13 zur Wiegeeinheit 11 entsprechend dem Pfeil 27 ist in gleichem Maße relativ zur Gewichtskraftrichtung 18 geneigt.

Weiter ist aus der Zusammenschau der Fig. 3 und 4 erkennbar, dass zwar unter Umständen - ebenso wie beim Stand der Technik nach den Fig. 1 und 2 - eine Umschichtung der Füllung 2 vom gestoppten Zustand nach Fig. 3 in den abgelegten Zustand nach Fig. 4 entsprechend dem Pfeil 28 stattfindet. Aus dem Vergleich der Erfindung nach Fig. 4 mit dem Stand der Technik nach Fig. 2 ist jedoch offensichtlich, dass diese Umschichtung der Füllung 2 bei der Erfindung gemäß dem Pfeil 28 (Fig. 4) viel geringer ausgeprägt ist als beim Stand der Technik gemäß dem Pfeil 28' (Fig. 2). Unter Umständen kann sogar erreicht werden, dass je nach Art der Füllung 2 eine solche Bewegung bzw. Umschichtung der Füllung 2 gar nicht stattfindet. Jedenfalls ist die hierfür erforderliche Zeitspanne bei der erfindungsgemäßen Vorrichtung und dem hier beschriebenen erfindungsgemäßen Verfahren deutlich kleiner als beim Stand der Technik. Von dem gesamten Zeitfenster zwischen Ablage der Kapsel 1 auf den Aufnahmeabschnitt 16 und dem nachfolgenden Entfernen der Kapsel 1 davon steht also ein vergleichsweise größerer zeitlicher Anteil zur Verfügung, innerhalb dessen die Kapsel 1 insgesamt einschließlich ihrer Füllung 2 zur Ruhe gekommen ist, innerhalb dessen also eine unverfälschte Wägung vorgenommen werden kann.

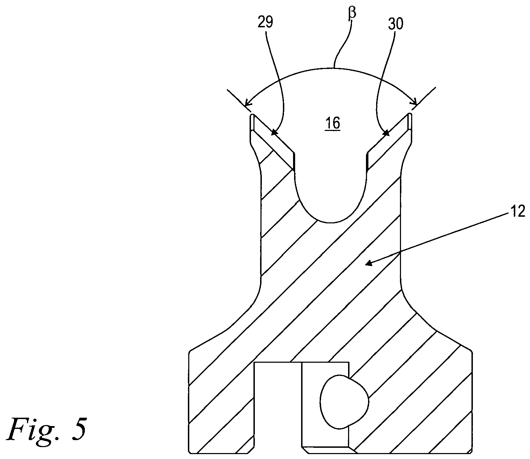

Fig. 5 zeigt noch den Aufnahmeabschnitt 16 der Wiegeaufnahme 12 nach Fig. 4 in einer Querschnittsdarstellung entlang der dort gezeigten Schnittlinie V-V. Demnach ist der Aufnahmeabschnitt 16 durch zwei Teilflächenabschnitte 29, 30 gebildet, auf denen die hier nicht gezeigte Kapsel 1 (Fig. 4) mittig aufliegt. Die beiden Teilflächenabschnitte 29, 30 sind im Querschnitt des Aufnahmeabschnittes 16 betrachtet einander zugewandt geneigt. Dies bedeutet, dass sie einen Flächenwinkel β mit einem Betrag von kleiner als 180° einschließen. Der Flächenwinkel β liegt bevorzugt in einem Bereich von einschließlich 120° bis einschließlich 60° und beträgt im gezeigten bevorzugten Ausführungsbeispiel zumindest näherungsweise 90°. Hierdurch wird die Kapsel in der quer zur Bewegungsrichtung 14 (Fig. 3) liegenden Seitenrichtung formschlüssig gehalten. Außerdem entstehen Auflagerkräfte mit zueinander gerichteten Kraftkomponenten, die die Haftreibung zwischen Kapsel 1 (Fig. 4) und Aufnahmeabschnitt 16 erhöhen und dadurch die Wahl größerer Neigungswinkel α begünstigen. Es kann aber auch eine ebene, im Querschnitt horizontal liegende Auflagefläche korrespondierend zu einem Flächenwinkel β = 180° insbesondere mit seitlichen Abstützungen für die Kapsel 1 (Fig. 4) zweckmäßig sein.

Die Erfindung ist hier beispielhaft im einspurigen Betrieb mit nur einem Kapseltransporter 13 und nur einer Wiegeeinheit 11 dargestellt. Im praktischen Betrieb können aber ohne Weiteres mehrspurige, parallel laufende Ausführungen zweckmäßig sein, bei denen eine entsprechende Anzahl von Kapseltransportern 13 und einer Wiegeeinheiten 11 für die gleichzeitige und parallele Prüfung von mehreren Kapseln 1 nebeneinander angeordnet sind.

## Patentansprüche

1. Vorrichtung (10) zum Wiegen von Kapseln (1) mit einer Füllung (2), wobei die Vorrichtung (10) eine Wiegeeinheit (11) mit einer Wiegeaufnahme (12) für die Kapsel (1), einen Kapseltransporter (13) zum Heranführen einzelner Kapseln (1) an die Wiegeeinheit (11) in einer Bewegungsrichtung (14) sowie eine Stoppvorrichtung (15) für die jeweils in der Bewegungsrichtung (14) herangeführte Kapsel (1) aufweist, und wobei die Stoppvorrichtung (15) dazu ausgelegt ist, die jeweils gestoppte Kapsel (1) in einem Aufnahmeabschnitt (16) der Wiegeaufnahme (12) abzulegen,
**dadurch gekennzeichnet, dass** der Aufnahmeabschnitt (16) der Wiegeaufnahme (12) als Reibungsauflage ausgebildet und bezüglich einer Horizontalrichtung (17) derart geneigt ist, dass ein bezogen auf die Bewegungsrichtung (14) vorderes Ende (19) des Aufnahmeabschnittes (16) tiefer liegt als ein hinteres Ende (20) des Aufnahmeabschnittes (16).

2. Vorrichtung nach Anspruch 1,
**dadurch gekennzeichnet, dass** der Aufnahmeabschnitt (16) der Wiegeaufnahme (12) bezüglich der Horizontalrichtung (17) in einem Neigungswinkel (a) geneigt ist, wobei der Neigungswinkel (α) in einem Bereich von einschließlich 5° bis einschließlich 25°, bevorzugt in einem Bereich von einschließlich 8° bis einschließlich 20° und insbesondere in einem Bereich von einschließlich 11° bis einschließlich 17° liegt.

3. Vorrichtung nach Anspruch 1 oder 2,
**dadurch gekennzeichnet, dass** der Kapseltransporter (13) als drehbares Transportrad (23) ausgebildet ist, und das die Wiegeaufnahme (12) eine in der Bewegungsrichtung (14) verlaufende Teilkreisform aufweist.

4. Vorrichtung nach einem der Ansprüche 1 bis 3,
**dadurch gekennzeichnet, dass** der Aufnahmeabschnitt (16) durch zwei Teilflächenabschnitte (29, 30) gebildet ist, wobei die beiden Teilflächenabschnitte (29, 30) im Querschnitt des Aufnahmeabschnittes (16) betrachtet einander zugewandt geneigt sind.

5. Vorrichtung nach Anspruch 4,
**dadurch gekennzeichnet, dass** die beiden Teilflächenabschnitte (29, 30) einen Flächenwinkel (β) einschließen, der in einem Bereich von einschließlich 120° bis einschließlich 60° liegt und insbesondere zumindest näherungsweise 90° beträgt.

6. Verfahren zum Wiegen von Kapseln (1) mit einer Füllung (2) mittels einer Vorrichtung (10) nach einem der Ansprüche 1 bis 5, umfassend folgende Schritte:
- Eine zumindest teilweise mit der Füllung (2) gefüllte Kapsel (1) wird mittels eines Kapseltransporters (13) in einer Bewegungsrichtung (14) an die Wiegeeinheit (11) herangeführt;
- Beim Erreichen der Wiegeeinheit (11) wird die Kapsel (1) aus ihrer Bewegung in der Bewegungsrichtung (14) mittels einer Stoppvorrichtung (15) gestoppt;
- Die gestoppte Kapsel (1) wird in einem Aufnahmeabschnitt (16) der Wiegeaufnahme (12) derart geneigt abgelegt, dass ein bezogen auf die Bewegungsrichtung (14) vorderes Ende (5) der Kapsel (1) tiefer liegt als ein hinteres Ende (6) der Kapsel (1), und dass die Kapsel (1) in dieser Lage und bezogen auf die Bewegungsrichtung (14) allein unter Einwirkung von Haftreibung auf der Wiegeaufnahme (12) zu liegen kommt;
- Die geneigt abgelegte Kapsel (1) wird gewogen.

## Claims

1. Device (10) for weighing capsules (1) with a filling (2), wherein the device (10) comprises a weighing unit (11) with a weighing receptacle (12) for the capsule (1), a capsule conveyor (13) for leading individual capsules (1) to the weighing unit (11) in a direction of movement (14) and a stopping device (15) for the capsule (1) respectively led along in the direction of movement (14), wherein the stopping device (15) is designed to deposit the respectively stopped capsule (1) in a reception section (16) of the weighing receptacle (12),
**characterised in that** the reception section (16) of the weighing receptacle (12) is designed as a friction support and inclined relative to a horizontal direction (17) in such a way that an end (19) of the reception section (16) which is in front in the direction of movement (14) lies at a lower level than a rear end (20) of the reception section (16).

2. Device according to claim 1,
**characterised in that** the reception section (16) of the weighing receptacle (12) is inclined relative to the horizontal direction (17) at an inclination angle (α), the inclination angle (α) being in a range of 5° to 25° inclusive, preferably in a range of 8° to 20° inclusive and in particular in a range of 11° to 17° inclusive.

3. Device according to claim 1 or 2,
**characterised in that** the capsule conveyor (13) is designed as a rotatable conveying wheel (23), and **in that** the weighing receptacle (12) has a part-circle shape extending in the direction of movement (14).

4. Device according to any of claims 1 to 3,
**characterised in that** the reception section (16) is formed by two sub-area sections (29, 30), wherein the two sub-area sections (29, 30) are inclined towards each other if viewed in the cross-section of the reception section (16).

5. Device according to claim 4,
**characterised in that** the two sub-area sections (29, 30) enclose a plane angle (β) in a range of 120° to 60° inclusive, being in particular at least approximately 90°.

6. Method for weighing capsules (1) with a filling (2) by means of a device (10) according to any of claims 1 to 5, comprising the following steps:
- A capsule (1) filled at least partially with the filling (2) is moved to the weighing unit (11) by means of a capsule conveyor (13) in a direction of movement (14);
- When reaching the weighing unit (11), the capsule (1) is stopped in its movement in the direction of movement (14) by means of a stopping device (15);
- The stopped capsule (1) is deposited in a reception section (16) of the weighing receptacle (12) with such an inclination that an end (5) of the capsule (1) which is in front in the direction of movement (14) lies at a lower level than a rear end (6) of the capsule (1) and that the capsule (1) comes to lie on the weighing receptacle (12) in this position and relative to the direction of movement (14) solely under the influence of static friction;
- The capsule (1) deposited in the inclined position is weighed.

## Revendications

1. Dispositif (10) pour peser des capsules (1) avec un remplissage (2), dans lequel le dispositif (10) comporte une unité de pesage (11) avec un logement de pesage (12) pour la capsule (1), un transporteur de capsules (13) pour amener des capsules individuelles (1) jusqu'à l'unité de pesage (11) dans une direction de déplacement (14), et un dispositif d'arrêt (15) pour la capsule (1) amenée dans la direction de déplacement (14), et dans lequel le dispositif d'arrêt (15) est conçu pour recevoir chaque capsule (1) arrêtée dans une section de logement (16) du logement de pesage (12),
**caractérisé en ce que** la section de logement (16) du logement de pesage (12) est formée comme un support à frottement et est inclinée par rapport à une direction horizontale (17) de telle sorte qu'une extrémité avant (19), par rapport au sens de déplacement (14), de la section de logement (16) se trouve plus bas qu'une extrémité arrière (20) de ladite section de logement (16).

2. Dispositif selon la revendication 1,
**caractérisé en ce que** la section de logement (16) du logement de pesage (12) est inclinée suivant un angle d'inclinaison (α) par rapport à la direction horizontale (17), dans lequel l'angle d'inclinaison (α) est situé dans une plage de 5° inclus à 25° inclus, de préférence dans une plage de 8° inclus à 20° inclus, et en particulier dans une plage de 11° inclus à 17° inclus.

3. Dispositif selon la revendication 1 ou 2,
**caractérisé en ce que** le transporteur de capsules (13) est formé comme une roue de transport rotative (23), et **en ce que** le logement de pesage (12) présente une forme de cercle primitif qui s'étend dans la direction de déplacement (14).

4. Dispositif selon l'une des revendications 1 à 3,
**caractérisé en ce que** la section de logement (16) est formée par deux sections de surface partielles (29, 30), dans lequel les deux sections de surface partielles (29, 30) sont inclinées en direction l'une de l'autre, vu en coupe transversale de la section de logement (16).

5. Dispositif selon la revendication 4,
**caractérisé en ce que** les deux sections de surface partielles (29, 30) définissent un angle de surface (β) qui est situé dans une plage de 120° inclus à 60° inclus et qui est en particulier au moins approximativement de 90°.

6. Procédé pour peser des capsules (1) avec un remplissage (2) à l'aide d'un dispositif (10) selon l'une des revendications 1 à 5,
comprenant les étapes suivantes :
- une capsule (1) au moins en partie remplie avec le remplissage (2) est amenée à l'aide d'un transporteur de capsules (13) jusqu'à l'unité de pesage (11), dans une direction de déplacement (14) ;
- la capsule (1), quand elle atteint l'unité de pesage (11), est arrêtée dans son déplacement dans la direction de déplacement (14) à l'aide d'un dispositif d'arrêt (15) ;
- la capsule (1) arrêtée est déposée inclinée dans une section de logement (16) du logement de pesage (12) de telle sorte qu'une extrémité avant (5), par rapport au sens de déplacement (14), de la capsule (1) se trouve plus bas qu'une extrémité arrière (6) de la capsule (1), et que la capsule (1), dans cette position et par rapport au sens de déplacement (14), ne vienne reposer sur le logement de pesage (12) que par adhérence ;
- la capsule (1) posée inclinée est pesée.
